# EUROPÄISCHE PATENTSCHRIFT

(11) **EP 1 922 801 B1**
(45) Veröffentlichungstag und Bekanntmachung des Hinweises auf die Patenterteilung: **13.10.2010**
(21) Anmeldenummer: 06777052.9
(22) Anmeldetag: 24.08.2006
(51) Int. Cl.: H02K 26/00, H02K 16/04, F01L 9/04

(54) **ROTOR EINES ELEKTROMOTORISCHEN VENTILANTRIEBS**
ROTOR PERTAINING TO AN ELECTROMOTIVE VALVE ACTUATING DEVICE
ROTOR D'UN MECANISME DE COMMANDE DE SOUPAPES DOTE D'UN MOTEUR ELECTRIQUE

(30) Priorität: 25.08.2005 DE 202005020678 U; 20.03.2006 DE 102006013099
(43) Veröffentlichungstag der Anmeldung: 21.05.2008
(73) Patentinhaber: LSP INNOVATIVE AUTOMOTIVE SYSTEMS GMBH, 85774 Unterföhring (DE)
(72) Erfinder: LEIBER, Thomas, 81675 München (DE); LEIBER, Heinz, 71739 Oberriexingen (DE); UNTERFRAUNER, Valentin, 80935 München (DE); KELLER, Jochen, 80469 München (DE)
(74) Vertreter: Lenzing Gerber Stute
(86) Internationale Anmeldenummer: PCT/EP2006/008304
(87) Internationale Veröffentlichungsnummer: WO 2007/022977

(56) Entgegenhaltungen:
- EP-A1- 0 497 317
- EP-A1- 1 445 433
- WO-A-2004/104380
- WO-A-2005/071817

## Beschreibung

Die vorliegende Erfindung betrifft einen Rotor eines elektromotorischen Ventilantriebs, wobei der Rotor aus zwei Glocken gebildet ist, die mit ihren Bodenwandungen zueinander weisen, wobei mehrere Permanentmagnete an zylindrischen Wandungsabschnitten der Glocken angeordnet sind, die einen ersten Teilbereich des Umfangs des Rotors bilden.

### Stand der Technik

In der WO2005/071817A1 ist ein käfigartiger Rotor gemäß dem Oberbegriff des Anspruchs 1 offenbart. Dieser Rotor ist aufwändig und besitzt ein relativ hohes Trägheitsmoment. Bei in Längsachse asymmetrischer Ventilankopplung verwindet sich der Rotorkäfig, was zum Magnetbruch führen kann. Die Lagerung der Magnete in der Mitte des Mitnehmers kann ebenfalls leicht zum Bruch der spröden Permanentmagnete führen.

In der DE 10 2005 040 389.1 ist ein weiterer Rotor beschreiben. Dieser Rotor ist robuster als der vorbeschriebene. Das Fenster für den Hebel zur Ventilankopplung ist jedoch aufwändig und verringert die Steifheit des Rotors.

Die Anforderungen hinsichtlich Temperaturumgebung, Vibrations- und Stoßbelastung für den Ventiltrieb sind sehr hoch. Insbesondere wird durch die Stoßbelastung, wenn das Ventil aufsetzt und die Regelung den Soft-Touch noch nicht eingeregelt hat, der Rotor stark belastet. Auch beim vollen Öffnen entsteht eine Stoßbelastung, wenn der Rotor bei fehlerhafter oder ungenügender Regelung auf einen Anschlag trifft.

Um eine hohe Kraft- oder Drehmomentausbeute zu erhalten, ist die volle Baulänge zum Zylinderabstand auszunutzen. Deshalb ist die Ventilebene bzw. -achse nicht symmetrisch zum Aktuator angeordnet, was eine außermittige Lagerung der Ventilankopplung zum Rotor bedeutet. Somit entsteht eine zusätzliche Belastung für den Rotor, insbesondere für die verwindungs- und stoßempfindlichen Permanentmagnete.

### Aufgabe der Erfindung

Es ist daher Aufgabe der vorliegenden Erfindung einen kosten- und gewichtsgünstigen Rotor für einen Aktuator bereitzustellen, der äußerst robust für Temperatur-, Stoß- und Vibrationsbelastung ist.

Diese Aufgabe wird vorteilhaft mit einem Rotor mit den Merkmalen des Anspruchs 1 gelöst. Vorteilhafte Ausgestaltungen der Rotors nach Anspruch 1 ergeben sich durch die Merkmale der Unteransprüche.

Der erfindungsgemäße Rotor zeichnet sich durch einen vorteilhaften Kraftfluss sowie eine verwindungssteife und massearme Rotorstruktur mit entsprechend geringer Belastung der stoß- und rissempfindlichen Magnete aus.

Die Magnete, welche vorteilhaft mit dem Rotor verklebt sein können, übertragen ihre Umfangskraft unmittelbar auf die Wandung der Glocke. Dieses Drehmoment wird vom Boden der Glocke über die Mitnehmerscheibe auf die Ventilankopplung übertragen. Die Ventilachse liegt dabei in der Mittelebene der Mitnehmerscheibe. Die Ventilkräfte, welche sich vorwiegend aus Gas- und Beschleunigungskräften sowie Stößen beim Ventilschließen zusammensetzen, müssen von der Lagerung der Ventilankopplung auf das Ventil übertragen werden. Die Lagerung der Ventilankopplung ist deshalb vorteilhaft symmetrisch zur Mitnehmerscheibe angeordnet und direkt mit dieser verbunden.

Die Glocken haben durch ihre geringe Höhe und dem geschlossenen Querschnitt eine hohe Torsionssteifigkeit. Hierdurch werden die Glocken weniger belastet und verformt, so dass die Permanentmagnete einer geringeren Belastung ausgesetzt sind.

Die Wandstärke der Glocke kann dünn ausgeführt werden, wodurch eine geringe Massenträgheit des Rotors erzielt werden kann. Dieses wirkt sich vorteilhaft auf die Dynamik und den Energieverbrauch des Ventiltriebs dar.

Der Rotor ist zudem vorteilhaft modular aufgebaut, so dass bei gleichem Aufbau verschiedene Ventilabstände möglich sind. Zudem ist der Rotor sowohl für Otto- als auch für Dieselmotoren geeignet. Letztere Applikation ist in der Regel besonders schwierig, da der Abstand von Ventil zu Zylinderkopfachse gering ist. Auch ist vorteilhaft eine hohe Kraftausbeute möglich. Die Mitnehmerscheibe ist vorteilhaft an einer Lagerhülse befestigt oder angeformt, welche drehbar auf einer im Gehäuse feststehend angeordneten Lagerwelle gelagert ist. Es ist jedoch auch möglich, die Mitnehmerscheibe an einer sich mit dem Rotor mitdrehenden Welle anzuordnen, welche z.B. über Wälzlager im Gehäuse des Ventilantriebs gelagert ist. In diesem Fall kann der Rotor fliegend gelagert werden, indem die feststehende Welle einseitig im Gehäuse sitzt. Dies ist besonders vorteilhaft für Kosten und Montage. Zur Minimierung der biegsamen Länge der Welle bietet es sich an, das Hauptlager in der Ebene der oben genannten Ventilkräfte anzuordnen. Auch die Kombination mit einem Drehwinkelsensor ist bei dieser Ausführung einfach.

Zur Befestigung des Lagers für die Ventilankopplung steht die Mitnehmerscheibe vorteilhaft radial zwischen den Glocken hervor.

Eine bestimmte Öffnungs- und Schließkraft kann durch die Wahl des Verhältnis der Abstände Ventilankopplung-Rotorachse und Permanentmagnete-Rotorachse eingestellt werden. So ist es vorteilhaft, wenn das Abstandsverhältnis 0,8 bis 1,2 beträgt. Um dies zu erreichen, können die Glocken bevorzugt asymmetrisch ausgestaltet werden. D.h. der Teilbereich, in dem die Permanentmagnete angeordnet sind, ist im Querschnitt kreisförmig ausgestaltet, wohingegen der Teilbereich, in dem keine Permanentmagnete angeordnet sind, abgeflacht, ein- oder ausgedellt ausgebildet werden kann.

Anhand von Zeichnung werden nachfolgend mögliche Ausführungsformen der Erfindung näher erläutert.

Es zeigen:
- Fig. 1:: Längsschnitt durch eine erste mögliche Ausführungs- form eines erfindungsgemäßen Rotors;
- Fig. 1a:: Querschnittsdarstellung des mit Permanentmagneten bestückten Rotors gem. Fig. 1 ;
- Fig. 1b:: Mitnehmerscheibe des Rotors gem. Fig. 1 und Fig. 1a;
- Fig. 2:: Längsschnitt durch eine zweite mögliche Ausfüh- rungsform eines erfindungsgemäßen Rotors;
- Fig. 2a:: Längsschnitt durch eine dritte mögliche Ausfüh- rungsform eines erfindungsgemäßen Rotors;
- Fig. 3:: Längsschnitt durch eine Twin-Anordnung eines Ven- tilantriebs.

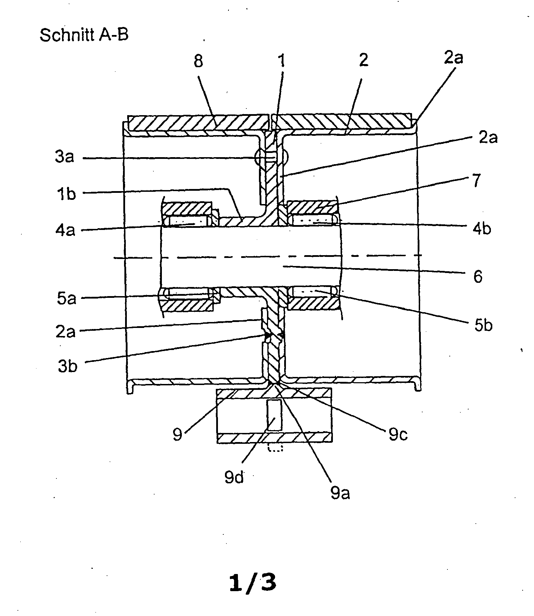

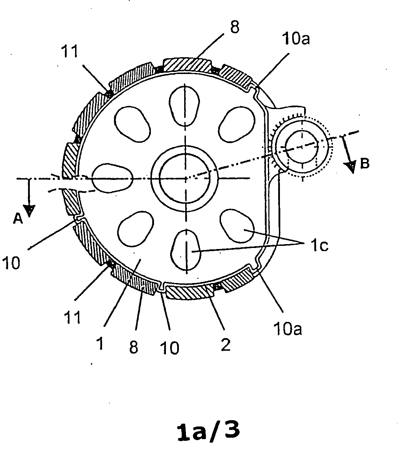

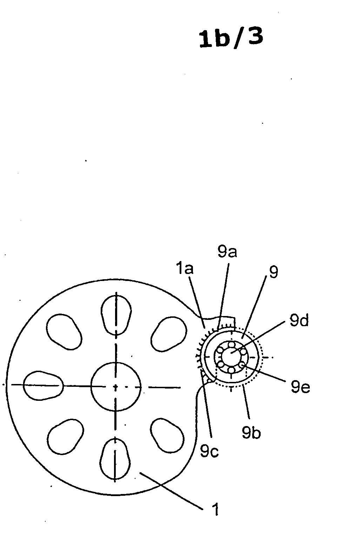

In Figur 1 ist eine erste mögliche Rotorausgestaltung dargestellt. Der Rotor ist als doppelte Glocke 2 mit Mitnehmerscheibe 1 ausgeführt. Der Kraftabgriff des nicht dargestellten Stellgliedes, im speziellen des Ventils, befindet sich vorzugsweise in der Ebene der Mitnehmerscheibe. Die Rotorglocken 2 sind mit der Mitnehmerscheibe 1 entweder durch Nieten 3a, Stanzprägen mit optional zusätzlichem Schweißen 3b, Stemmen oder Schweißen verbunden. Die Mitnehmerscheibe 1 sitzt auf der Welle 6. Die Mitnehmerscheibe 1 hat hierzu einen axial gerichteten Kragen 1b, welcher mit seiner radial nach innen gerichteten Fläche auf der mitdrehenden Welle 6 anliegt. Der Kragen 1b kann mit der Welle 6 verklebt, verschraubt oder verschweißt sein. Andere Verbindungstechniken sind ebenso möglich. Die Welle 6 ist mittels den, vorzugsweise als Wälzlagern ausgeführten, Lagern 4a und 4b im Gehäuse 7 gelagert ist. Die axiale Lagerung erfolgt über Anlaufscheiben 5a und 5b mit geeigneten Gleiteigenschaften.

Am Umfang der Glocken 2 sind Permanentmagneten 8 aufgeklebt oder zusätzlich mit Gießharz vergossen. Eine andere Befestigung des Permanentmagnete ist selbstverständlich möglich. Für die Ausführung der Magnete sind verschiedene Varianten vorgesehen. In der Standardausführung sind die Magnete in Umfangsrichtung in Segmente aufgeteilt. Aus Kostengründen können die Magnete auch in Längsrichtung halbiert oder mehrteilig ausgeführt sein. Es ist jedoch ebenso möglich, das der Rotor nur mit einem einzigen Magneten - nicht dargestellt - ausgestattet wird, der unterschiedlich magnetisiert ist.

Zur Ankopplung des nicht dargestellten Stellgliedes ist die Lagerhülse 9 mit der Mitnehmerscheibe 1 verschweißt 9c. Die Lagerhülse 9 kann an der Lauffläche der Lager einsatzgehärtet sein. Um trotzdem eine sicher Schweißung zu gewährleisten, verfügt die Lagerhülse über einen Bund 9a welcher sich außerhalb der Härtezone befindet. Das Übersetzungsverhältnis kann durch den Achsabstand der Rotorwelle 6 und der Lagerhülse ca. zwischen 0.8 und 1.2 variiert werden.

Der spezielle Aufbau des Rotors hat eine minimale Strukturbelastung zur Folge. Die Glocken 2 sind aufgrund ihrer geringen Höhe in axialer Richtung äußerst verwundungssteif und können als dünnwandiges Tiefziehteil ausgeführt werden. Zur zusätzlichen Verstärkung, kann der äußere Rand 2a der Glocke umgeformt werden. Hierdurch entsteht ein Verstärkungsring 2a, welcher zur die Radialkräfte aufnimmt.

Die Magnete 8 sind auf deren Mantelfläche der Glocken 2 aufgelegt und mit den Glocken verklebt. Die Kraftübertragung auf den Rotor erfolgt somit unmittelbar an der Kraftentstehung was eine minimale Belastung der Magnete zur Folge hat. Radiale Kräfte werden ebenso direkt von der Glocke insbesondere durch den Verstärkungsring 2a aufgenommen.

Optional ist es möglich, die Magnete durch eine insbesondere komplette Ummantelung des Rotors gegen Bruch bzw. Abbröckeln zu schützen. Dazu kann der bestückte Rotor unter anderem mit einem Gießlack, einem Schrumpfschlauch oder durch einen magnetisch nicht leitende Blechfolie ummantelt werden. Diese Ummantelung ist in der Figur nicht dargestellt.

Die Fig. 1a zeigt eine Querschnittsdarstellung durch den Rotor gem. Fig. 1. Zur besseren Magneteinbettung können in den Rotorglocken 2 zusätzliche Sicken 10, 10a eingeprägt werden. Neben der Klebverbindung wir die Umfangskraft der Magneten 8 somit über Formschluss auf die Glocke 2 übertragen. In Kombination mit Temperaturausgleichelementen 11 ist eine optimierte Übertragung der Umfangskräfte gewährleistet. Die Temperaturausgleichelemente 11 kompensieren den negativen Temperaturausdehnungskoeffizienten der Permanentmagneten 8. Es sind verschiedene Anordnungskombinationen der Sicken und Temperaturausgleichelemente möglich. Wie in Fig. 1a oben dargestellt, können die Sicken 10a zum einen nur am Anfang und am Ende der Magneten 8 angebracht werden. Die Lücken zwischen sämtlichen Magneten 8 wird somit mit den Temperaturausgleichelemente 11 aufgefüllt. Diese Anordnung empfiehlt sich auch falls nur ein Magnet die mehreren Magnete ersetzt, welcher dann unterschiedlich magnetisiert sein muss. In diesem Fall wird der Großteil der Umfangskraft über die Klebeverbindung übertragen.

In Fig. 1a unten ist eine Variante dargestellt, bei der zwischen jedem zweiten Magneten eine Sicke 10 angeordnet ist. Somit entstehen Magnetpaare, bei welchen sich je nach Kraftrichtung ein Magnet direkt auf eine Sicke 10 und der andere Magnet zum Teil über das Temperaturausgleichelemente indirekt auf die Sicke 10 und zum anderen Teil über die Klebeverbindung auf die Glocke 2 abstützt. Alternativ ist es auch möglich den Rotor ohne Sicken zu gestalten. Die Mitnehmerscheibe hat insbesondere fensterartige Aussparungen 1c, die zur Gewichtsreduzierung des Rotors beitragen.

In Fig. 1b ist die Verbindung der Lagerhülse 9 mit der Mitnehmerscheibe 1 dargestellt. Die Mitnehmerscheibe 1 verfügt über eine festigkeitsoptimierte Fassung 1a in welche die Lagerhülse 9 eingelegt und am Bund 9a, 9c verschweißt wird. Der Bund 9a der Lagerhülse 9 kann außerhalb der Schweißnaht aus Gewichtsgründen abgestanzt werden 9b.

Die Lagerhülse kann eine Welle aufnehmen, bei der in den nicht gezeichneten Verbindungselementen die Lagerung erfolgt. Vorzugsweise sind in der harten Bohrung der Lagerhülse 9 Wälzlager 9e eingesetzt die die Lagerwelle 9d aufnehmen. Diese ist nahezu spielfrei mit den Verbindungselementen zum Ventil verbunden. Diese Lösung hat den Vorteil, dass die Verbindungselemente klein sind und mit dem Ventil durch die Bohrung der Ventilführung eingeschoben werden können.

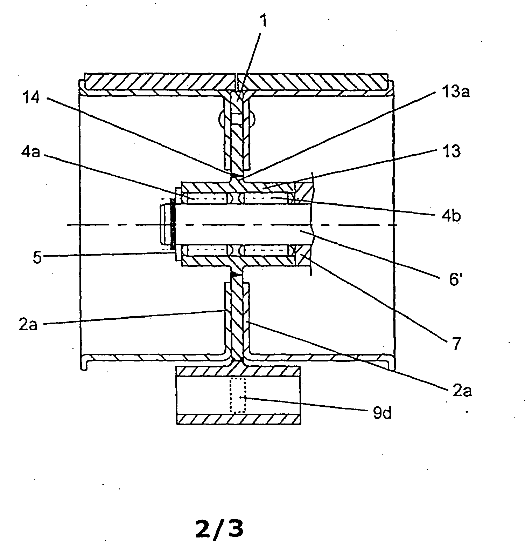

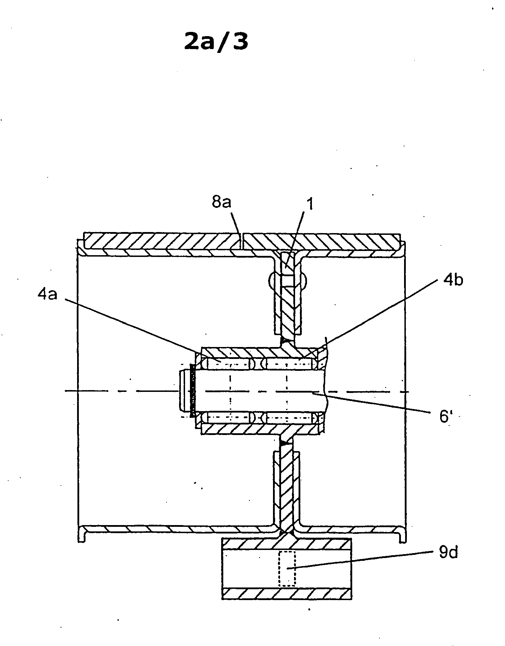

In Fig. 2 ist eine zweite mögliche Ausführungsform des Rotors dargestellt. In diesem Fall ist die Lagerwelle 6' im Gehäuse 7 eingepresst und rotiert nicht. Die Mitnehmerscheibe 1 ist mit einer Rotorlagerhülse 13 verbunden, in welcher die Wälzlager 4a und 4b laufen. Die Buchse 13 ist optional an den Laufflächen der Wälzkörper 4a, 4b durch Einsatzhärtung behandelt und verfügt über einen Bund 13a, welcher nicht gehärtet ist. Somit kann die Hülse 13 mit der Mitnehmerscheibe 1 bei 14 verschweißt werden. Die axiale Lagerung des Rotors erfolgt über die Stirnfläche der Rotorlagerhülse 13 und über Anlaufscheiben 5 welche auf der Lagerwelle 6' axial gesichert sind. Der wesentliche Vorteil dieses Lagerung liegt darin, dass die Lagerung fliegend erfolgen kann. Das heißt, dass der eine Lagerbock evtl. entfallen kann. Dieses Lagerkonzept ist von den Fertigungstoleranzen gut beherrschbar und ist zudem kostengünstiger als eine beidseitige Lagerung, wie sie in Fig. 1 dargestellt ist.

In Fig. 2a ist eine optimale Anordnung der Lager 4a und 4b dargestellt, sofern die Mitnehmerscheibe 1 nicht in der Magnetmitte 8a liegt. Bei dieser Anordnung empfiehlt es sich, ein Lager 4b in die Ebene der Mitnehmerscheibe 1 und das andere Lager 4a in die Ebene der Magnetmitte 8a zu positionieren. Somit kann der Lagerwellenzapfen 6' relativ kurz ausgeführt werden. Diese Anordnung hat eine minimale Belastung der Lager 4a und 4b und eine minimale Durchbiegung der Welle 6 zur Folge.

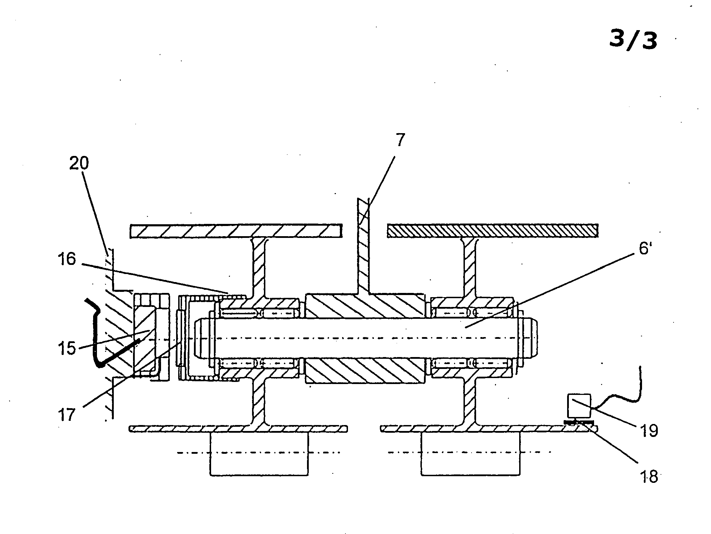

In Fig. 3 ist eine Ausführungsvariante für eine Twin-Aktuatorik dargestellt. Die Lagerwelle 6' ist in das Gehäuse 7 eingepresst. An beiden Enden ist, wie in Fig. 2 beschrieben, je ein Rotor fliegend gelagert. Der Rotor ist als ein Teil dargestellt, so dass die Mitnehmerscheibe nicht zu erkennen ist.

Des weitern sind in Fig. 3 zwei mögliche Sensorkonzepte dargestellt. Die Winkelposition des linken Rotors wird über einen mit dem Aktuatorgehäuse 20 verbundenem Drehwinkelsensor 15, vorzugsweise einem Hall-Sensor, ermittelt. Als Sensor-Target dient hierbei ein Permanentmagnet 16, der in eine Hülse 17 eingebettet ist, welche auf den Rotor verdrehsicher aufgesteckt ist. Der Sensor 19 misst den Winkel des rechten Rotors indirekt über die relative Lage des Targets 18, welches auf den Rotor abgewickelt ist. Der Sensor ist vorzugsweise bei dieser Ausführungsform als mehrstufiger Hall-Inkrementalsensor ausgeführt.

**Bezugszeichen:**
- 1: Mitnehmerscheibe
- 1a: festigkeitsoptimierte Fassung
- 1b: axial gerichteter Kragen zur Befestigung an der Welle 6
- 1c: fensterartige Aussparungen der Mitnehmerscheibe
- 2: Glocken
- 2a: Verstärkungsring
- 3a: Nieten
- 3b: Stanzprägung mit Schweißnaht
- 4a, 4b: Wälzlager
- 5a, 5b: Anlaufscheiben
- 6: Welle, mitdrehend
- 6': Lagerwelle, am Gehäuse fest
- 7: Gehäuse
- 8: Magnet
- 8a: Magnetmitte
- 9: Schweißnaht Mitnehmer Laufbuchse
- 9d: fensterartige Öffnung in der Wandung der Lagerhülse 9
- 10: Sicken
- 11: Temperaturausgleichselement
- 12: Schweißnaht Mitnehmerscheibe, Lagerbuchse
- 13: Rotorlagerbuchse
- 13a: Bund der Rotorlagerbuchse
- 14: Schweißnaht Mitnehmer,° Rotorlagerbuchse
- 15: Drehwinkelsensor
- 16: Permanentmagnet (Drehwinkelsensor Target)
- 17: Hülse Drehwinkelsensor Target
- 18: Target Inkrementalsensor
- 19: Inkrementalsensor

## Patentansprüche

1. Rotor eines elektromotorischen Ventilantriebs, mit mehreren Permanentmagneten (8) und mit einer Mitnehmerscheibe (1), die drehbar im Gehäuse des Ventilantriebs gelagert ist und deren Flächennormale parallel zur Drehachse des Rotors ist, wobei an der Mitnehmerscheibe (1) ein Lager (9) zur Ventilankopplung geordnet ist, **dadurch gekennzeichnet, dass** der Rotor aus zwei Glocken (2) gebildet ist, die mit ihren Bodenwandungen (2a) zueinander weisen, wobei die Permanentmagnete (8) an zylindrischen Wandungsabschnitten der Glocken (2) angeordnet sind, die einen ersten Teilbereich des Umfangs des Rotors bilden, und dass an der Mitnehmerscheibe (1) die Bodenwandungen (2a) der Glocken (2) angeordnet sind.

2. Rotor nach Anspruch 1, **dadurch gekennzeichnet, dass** die Mitnehmerscheibe (1) an einer sich mit dem Rotor mitdrehenden Lagerhülse (13) oder Lagerwelle (6) angeordnet, insbesondere angeformt, angeklebt oder angeschweißt ist.

3. Rotor nach Anspruch 2, **dadurch gekennzeichnet, dass** die mitdrehende Lagerhülse (13) bzw. Lagerwelle (6) drehbar, insbesondere mittels zwischengelagerter Wälzkörper (4a, 4b) im Gehäuse gelagert ist.

4. Rotor nach Anspruch 3, **dadurch gekennzeichnet, dass** die Lagermitte des Wälzlagers (4b) in der Ebene der Mitnehmerscheibe (1) angeordnet ist.

5. Rotor nach Anspruch 3 oder 4, **dadurch gekennzeichnet, dass** Wälzkörper (4a, 4b) in mindestens zwei Reihen axial nebeneinander um den Umfang der Lagerwelle (6') verteilt angeordnet sind.

6. Rotor nach Anspruch 5, **dadurch gekennzeichnet, dass** eine Reihe von Wälzkörpern (4b) das Hauptstützlager bilden, wobei diese Wälzkörper (4b) in der Ebene der Mitnehmerscheibe (1) angeordnet sind.

7. Rotor nach einem der Ansprüche 2 bis 6, **dadurch gekennzeichnet, dass** die Lagerhülse (13) eine am Gehäuse des Antriebs fest angeordnete Lagerwelle (6') umfasst und zusammen mit der Lagerwelle (6') und Wälzkörpern (4a, 4b) mindestens ein Wälzlager bildet.

8. Rotor nach einem der Ansprüche 2 bis 7, **dadurch gekennzeichnet, dass** die Lagerhülse (13) einen radial nach außen gerichteten Kragen (13a) aufweist, an dem die Mitnehmerscheibe (1) befestigt, insbesondere angeschweißt, angeklebt, angenietet oder angeschraubt ist.

9. Rotor nach einem der Ansprüche 2 bis 8, **dadurch gekennzeichnet, dass** die Mitnehmerscheibe (1) einen axial gerichteten Kragen (1b) hat, der mit seiner radial innenliegenden Fläche an der Lagerwelle (6) anliegt und mit dieser verbunden, insbesondere verschweißt ist.

10. Rotor nach einem der vorhergehenden Ansprüche, **dadurch gekennzeichnet, dass** die Bodenwandungen (2a) der Glocken (2) an der Mitnehmerscheibe mittels Nieten, Schweißen, Stanzprägung oder Klebung befestigt sind.

11. Rotor nach einem der vorhergehenden Ansprüche, **dadurch gekenntzeichnet, dass** die Ventilankopplung zusammen mit der Ventilachse in der Ebene der Mitnehmerscheibe (1) angeordnet ist.

12. Rotor nach einem der vorhergehenden Ansprüche, **dadurch gekennzeichnet, dass** das Lager zur Ventilankopplung eine Lagerhülse (9) ist, die mindestens eine fensterartige Öffnung (9d) in der Wandung hat, durch die das Ventil mit der in der Lagerhülse (9) verdrehbar gelagerten Welle verbunden ist.

13. Rotor nach einem der vorhergehenden Ansprüche, **dadurch gekennzeichnet, dass** die Lagerhülse (9) Wälzkörper (9e) und eine Lagerwelle (9d) aufnimmt und die Lagerwelle (9d) die Verbindungselemente zum Ventil aufnimmt.

14. Rotor nach einem der vorhergehenden Ansprüche, **dadurch gekennzeichnet, dass** die Glocken dünnwandige Tiefziehteile sind, die eine Versteifung der offenen Stirnwandung, insbesondere in form eines Kragens aufweisen.

15. Rotor nach einem der vorhergehenden Ansprüche, **dadurch gekennzeichnet, dass** zwischen den Permanentmagneten (8) Bereiche mit einem Material (11) zur Temperaturausdehnungskompensation ausgefüllt sind.

16. Rotor nach Anspruch 15, **dadurch gekennzeichnet, dass** das Material (11) gleichzeitig zur Befestigung der Magnete (8) am Rotor dient, insbesondere die Magnete mit dem Rotor verklebt.

17. Rotor nach einem der vorhergehenden Ansprüche, **dadurch gekennzeichnet, dass** die Permanentmagnete mittels einer den Rotor umspannenden Hülle ummantelt sind.

18. Rotor nach einem der vorhergehenden Ansprüche, **dadurch gekennzeichnet, dass** die Glocken und/oder Mitnehmerscheibe (1) fensterartige Aussparungen (1c) zur Gewichtsreduzierung aufweisen.

19. Rotor nach einem der vorhergehenden Ansprüche, **dadurch gekennzeichnet, dass** am Rotor ein Target zum Zusammenwirken mit einem am Gehäuse des Antriebs angeordneten Drehwinkelsensor angeordnet ist.

20. Rotor nach einem der vorhergehenden Ansprüche, **dadurch gekennzeichnet, dass** die Mitnehmerscheibe zumindest in einem zweiten Teilbereich des Umfangs des Rotors, welcher nicht mit Permanentmagneten bestückt ist, radial über die Außenwandung der Glocken heraustritt, wobei das Lager zur Ventilankopplung an der äußeren schmalen Stirnseite der Mitnehmerscheibe angeordnet, insbesondere angeschweißt, ist.

21. Segmentantrieb mit einem Rotor nach einem der vorhergehenden Ansprüche, **dadurch gekennzeichnet, dass** der erste Teilbereich des Rotors von einem Außenstator zumindest teilweise umfasst und innerhalb des Rotors ein Innenstator angeordnet ist, wobei Innen- und Außenstator am Gehäuse des Segmentmotors befestigt oder integriert sind.

## Claims

1. Rotor of an electromotor valve drive having a plurality of permanent magnets (8) and having a driving plate (1) which is rotatably supported in the housing of the valve drive and the surface normal of which is parallel to the rotational axis of the rotor, with a bearing (9) designed for coupling to a valve being arranged on the driving plate (1), **characterised in that** the rotor is formed from two bells (2) facing each other with their bottom walls (2a), said permanent magnets (8) being arranged on cylindrical wall sections of the bells (2), which wall sections form a first partial area of the circumference of the rotor, and **in that** the bottom walls (2a) of the bells (2) are arranged on the driving plate (1).

2. Rotor according to Claim 1, **characterised in that** the driving plate (1) is arranged on, in particular integrally moulded, bonded or welded to, a bearing sleeve (13) or bearing shaft (6) rotating together with the rotor.

3. Rotor according to Claim 2, **characterised in that** the corotating bearing sleeve (13) or bearing shaft (6) is rotatably supported in the housing, in particular by means of interposed rolling bodies (4a, 4b).

4. Rotor according to Claim 3, **characterised in that** the bearing centre of the rolling bearing (4b) is arranged in the plane of the driving plate (1).

5. Rotor according to Claim 3 or 4, **characterised in that** rolling bodies (4a, 4b) are arranged in such a way that they are distributed over at least two rows axially next to each other around the circumference of the bearing shaft (6').

6. Rotor according to Claim 5, **characterised in that** a row of rolling bodies (4b) forms the main support bearing, said rolling bodies (4b) being arranged in the plane of the driving plate (1).

7. Rotor according to any one of Claims 2 to 6, **characterised in that** the bearing sleeve (13) comprises a bearing shaft (6') which is fixedly arranged on the housing of the drive and forms, together with the bearing shaft (6') and the rolling bodies (4a, 4b), at least one rolling bearing.

8. Rotor according to any one of Claims 2 to 7, **characterised in that** the bearing sleeve (13) has a radially outwardly directed collar (13a) to which the driving plate (1) is fastened, in particular welded, bonded, riveted or screwed.

9. Rotor according to any one of Claims 2 to 8, **characterised in that** the driving plate (1) has an axially directed collar (1b) which rests with its radially internal surface against the bearing shaft (6) and is connected, in particular welded, thereto.

10. Rotor according to any one of the preceding claims, **characterised in that** the bottom walls (2a) of the bells (2) are fastened to the driving plate by riveting, welding, embossing or bonding.

11. Rotor according to any one of the preceding claims, **characterised in that** the valve coupling with the valve axis is arranged in the plane of the driving plate (1).

12. Rotor according to any one of the preceding claims, **characterised in that** the bearing for coupling to a valve is a bearing sleeve (9) which has at least one window-like opening (9d) in the wall, through which the valve is connected to the shaft which is rotatably supported in the bearing sleeve (9).

13. Rotor according to any one of the preceding claims, **characterised in that** the bearing sleeve (9) receives rolling bodies (9e) and a bearing shaft (9d) and the bearing shaft (9d) receives the elements for connection to the valve.

14. Rotor according to any one of the preceding claims, **characterised in that** the bells are thin-walled deep-drawn components, the open front wall of which has a stiffening, in particular in the form of a collar.

15. Rotor according to any one of the preceding claims, **characterised in that** between the permanent magnets (8), areas are filled with a material (11) for temperature expansion compensation.

16. Rotor according to Claim 15, **characterised in that** the material (11) is used at the same time for fastening the magnets (8) to the rotor, in particular by way of bonding the magnets to the rotor.

17. Rotor according to any one of the preceding claims, **characterised in that** the permanent magnets are encased by a jacket surrounding the rotor.

18. Rotor according to any one of the preceding claims, **characterised in that** the bells and/or the driving plate (1) have window-like recesses (1c) for weight reduction.

19. Rotor according to any one of the preceding claims, **characterised in that** a target designed for cooperation with an angular displacement sensor arranged on the housing of the drive is arranged on the rotor.

20. Rotor according to any one of the preceding claims, **characterised in that** the driving plate radially protrudes out of the external wall of the bells at least in a second partial area of the circumference of the rotor, which is not equipped with permanent magnets, said bearing being arranged on, in particular welded to, the outer narrow front side of the driving plate for coupling to a valve.

21. Segment drive having a rotor according to any one of the preceding claims, **characterised in that** the first partial area of the rotor is at least partially surrounded by an outer stator and an inner stator is arranged inside the rotor, said inner and outer stators being fastened to or integrated in the housing of the segment motor.

## Revendications

1. Rotor d'un système d'entraînement à moteur électrique pour une commande de soupape, comprenant plusieurs aimants permanents (8), et un disque entraîneur (1) qui est monté rotatif dans le carter du système d'entraînement de commande de soupape et dont la normale à sa surface est parallèle à l'axe de rotation du rotor, un palier (9) pour le couplage à la soupape étant agencé sur le disque entraîneur (1), **caractérisé en ce que** le rotor est constitué de deux cloches (2) qui sont dirigées l'une vers l'autre avec leur paroi de fond (2a), les aimants permanents (8) étant agencés sur des secteurs de paroi cylindriques des cloches (2), qui forment une première zone partielle de la périphérie du rotor, et **en ce que** sur le disque entraîneur (1) sont agencées les parois de fond (2a) des cloches (2).

2. Rotor selon la revendication 1, **caractérisé en ce que** le disque entraîneur (1) est agencé sur une douille de palier (13) ou un arbre de palier (6), qui tournent avec le rotor, en y étant notamment formé ou moulé, collé ou soudé.

3. Rotor selon la revendication 2, **caractérisé en ce que** la douille de palier (13) ou l'arbre de palier (6) tournant avec le rotor, est monté rotatif dans le carter, notamment au moyen de corps de roulement (4a, 4b) intercalés.

4. Rotor selon la revendication 3, **caractérisé en ce que** le milieu du palier à roulement (4b) est disposé dans le plan du disque entraîneur (1).

5. Rotor selon la revendication 3 ou la revendication 4, **caractérisé en ce que** des corps de roulement (4a, 4b) sont agencés en au moins deux rangées, axialement côte à côte, en étant répartis sur la périphérie de l'arbre de palier (6').

6. Rotor selon la revendication 5, **caractérisé en ce qu'**une rangée de corps de roulement (4b) forment le palier de support principal, ces corps de roulement (4b) étant agencés au niveau du plan du disque entraîneur (1).

7. Rotor selon l'une des revendications 2 à 6, **caractérisé en ce que** la douille de palier (13) englobe un arbre de palier (6') disposé de manière fixe dans le carter du système d'entraînement, et forme, en commun avec l'arbre de palier (6') et des corps de roulement (4a, 4b), au moins un palier à roulement.

8. Rotor selon l'une des revendications 2 à 7 **caractérisé en ce que** la douille de palier (13) présente une collerette (13a) dirigée radialement vers l'extérieur et sur laquelle est fixé le disque entraîneur (1), notamment en y étant soudé, collé, riveté ou vissé.

9. Rotor selon l'une des revendications 2 à 8 **caractérisé en ce que** le disque entraîneur (1) possède une collerette (1b) d'orientation axiale, qui s'appuie, par sa surface radialement intérieure, sur l'arbre de palier (6), et est reliée à celui-ci, notamment en y étant soudée.

10. Rotor selon l'une des revendications précédentes, **caractérisé en ce que** les parois de fond (2a) des cloches (2) sont fixées au disque entraîneur par rivetage, soudage, sertissage par matriçage ou collage.

11. Rotor selon l'une des revendications précédentes, **caractérisé en ce que** le couplage de soupape est agencé, en commun avec l'axe de soupape, dans le plan du disque entraîneur (1).

12. Rotor selon l'une des revendications précédentes, **caractérisé en ce que** le palier pour le couplage de soupape est une douille de palier (9) qui possède, dans la paroi, au moins une ouverture (9d) en forme de fenêtre par laquelle la soupape est reliée à l'arbre monté rotatif dans la douille de palier (9).

13. Rotor selon l'une des revendications précédentes, **caractérisé en ce que** la douille de palier (9) reçoit des corps de roulement (9e) et un arbre de palier (9d), et l'arbre de palier (9d) reçoit les éléments de liaison à la soupape.

14. Rotor selon l'une des revendications précédentes, **caractérisé en ce que** les cloches sont des pièces embouties à paroi mince, qui présentent un renforcement de la paroi frontale ouverte, notamment sous la forme d'une collerette.

15. Rotor selon l'une des revendications précédentes, **caractérisé en ce qu'**entre les aimants permanents (8), des zones sont remplies d'un matériau (11) pour la compensation des dilatations thermiques.

16. Rotor selon la revendication 15, **caractérisé en ce que** le matériau (11) sert simultanément à la fixation des aimants (8) sur le rotor, notamment en assurant le collage des aimants sur le rotor.

17. Rotor selon l'une des revendications précédentes, **caractérisé en ce que** les aimants permanents sont enveloppés ou gainés au moyen d'une gaine ou enveloppe enserrant le rotor.

18. Rotor selon l'une des revendications précédentes, **caractérisé en ce que** les cloches et/ou le disque entraîneur (1) présentent des évidements (1c) en forme de fenêtres, pour assurer une réduction de poids.

19. Rotor selon l'une des revendications précédentes, **caractérisé en ce que** sur le rotor est placée une cible destinée à l'interaction avec un capteur d'angle de - rotation agencé sur le carter du système d'entraînement.

20. Rotor selon l'une des revendications précédentes, **caractérisé en ce que** le disque entraîneur, au moins dans une deuxième zone partielle de la périphérie du rotor, qui n'est pas équipée d'aimants permanents, fait saillie radialement hors de la paroi extérieure des cloches, le palier pour le couplage de soupape étant agencé sur la surface frontale extérieure étroite du disque entraîneur, notamment en y étant soudé.

21. Système d'entraînement segmenté comprenant un rotor selon l'une des revendications précédentes, **caractérisé en ce que** la première zone partielle du rotor est entourée au moins en partie par un stator extérieur, et à l'intérieur du rotor est agencé un stator intérieur, le stator intérieur et le stator extérieur étant fixés ou intégrés au carter du moteur segmenté.
